# FASCICULE DE BREVET EUROPEEN

(11) **EP 2 539 581 B1**
(45) Date de publication et mention de la délivrance du brevet: **29.06.2016**
(21) Numéro de dépôt: 11707130.8
(22) Date de dépôt: 22.02.2011
(51) Int. Cl.: F03B 13/26, F03B 15/00, F03B 17/06

(54) **SYSTEME DE CONVERSION DE L'ENERGIE D'UN FLUIDE NATURELLEMENT EN MOUVEMENT**
SYSTEM ZUR UMWANDLUNG DER ENERGIE EINER FLÜSSIGKEIT MIT NATÜRLICHER BEWEGUNG
SYSTEM FOR CONVERTING THE ENERGY OF A NATURALLY MOVING FLUID

(30) Priorité: 22.02.2010 FR 1051248
(43) Date de publication de la demande: 02.01.2013
(73) Titulaire: Guinard, Paul, 92210 Saint Cloud (FR)
(72) Inventeur: Guinard, Paul, 92210 Saint Cloud (FR)
(74) Mandataire: Regimbeau
(86) Numéro de dépôt international: PCT/EP2011/052616
(87) Numéro de publication internationale: WO 2011/101493

(56) Documents cités:
- WO-A1-2009/031887
- WO-A2-2008/081187
- GB-A- 2 460 309
- US-A- 4 571 155

## Description

### DOMAINE DE L'INVENTION

L'invention concerne un système de conversion de l'énergie d'un fluide naturellement en mouvement.

### ETAT DE LA TECHNIQUE

On connaît aujourd'hui plusieurs types de dispositifs permettant de capter l'énergie cinétique d'un fluide naturellement en mouvement, tel qu'un courant marin par exemple, pour la convertir en une énergie utilisable.

Le document WO 03/029645 décrit un système de génération d'électricité comprenant des unités de turbines immergées dans l'eau dé mer, chaque unité incluant un manchon présentant un canal et une turbine montée dans le canal, la turbine étant entrainée en rotation par le courant d'eau circulant dans le canal. Les unités de turbines sont fixées au fond de la mer au moyen de châssis fixes de manière à ce que les unités de turbines soient alignées avec une direction principale du courant de marée.

Comme l'orientation des unités de turbines est fixe, ce système ne permet pas de faire fonctionner les unités de turbine en cas d'inversion du sens du courant.

Le document FR 2 913729 décrit un dispositif pour capter une énergie cinétique d'un courant marin comprenant une hélice, une pompe centrifuge multicellulaire apte à être entrainée par l'hélice et un système venturi pour accélérer la vitesse du courant marin qui anime l'hélice. Ce document prévoit la possibilité que le dispositif soit fixé au fond de la mer au moyen d'un joint tournant et soit apte à « éviter », c'est-à-dire à s'orienter de lui-même selon la direction et le sens du courant.

Cette possibilité présente l'avantage de permettre d'entrainer l'hélice en rotation malgré les variations du sens du courant.

Cependant, dans le cas d'un courant provoqué par la marée, présentant une direction sensiblement constante, il existe un risque que le dispositif ne s'oriente pas correctement au moment de l'inversion du sens du courant. Cela est d'autant plus vrai qu'à ce moment, le courant présente une intensité faible.

Un autre document représentant l'art antérieur est le document US 4 571 155 A.

### RESUME DE L'INVENTION

Un but de l'invention est de proposer un système de conversion qui s'oriente correctement en cas d'inversion du sens du courant.

Ce problème est résolu dans le cadre de la présente invention grâce à un système de conversion de l'énergie d'un fluide naturellement en mouvement selon une direction d'écoulement sensiblement constante, comprenant :
- un ensemble de conversion incluant un ou plusieurs module(s) de conversion, chaque module de conversion comprenant une hélice apte à être entrainée en rotation par le fluide, l'ensemble de conversion présentant une forme générale symétrique par rapport à un plan de symétrie,
- des moyens de liaison de l'ensemble de conversion avec un support fixe, les moyens de liaison autorisant une rotation de l'ensemble de conversion par rapport au support,
- des moyens pour provoquer une rotation de l'ensemble par rapport au support fixe sous l'effet d'une inversion de sens d'écoulement du fluide, de manière à orienter le module de conversion en fonction du sens d'écoulement du fluide,
dans lequel les moyens pour provoquer une rotation de L'ensemble comprennent un élément de dissymétrie apte à créer un défaut de symétrie de l'ensemble de conversion par rapport au plan de symétrie de l'ensemble.

Le fluide naturellement en mouvement est par exemple de l'eau de mer dont l'écoulement est provoqué par la marée. Par l'expression « direction sensiblement constante », on entend dans le cadre de la présente invention, une direction dont l'orientation présente une variation inférieure à 5 degrés.

Le défaut de symétrie créé par l'élément de dissymétrie favorise un retournement de l'ensemble de conversion sous l'action du courant marin. En effet, du fait de ce défaut de symétrie, l'inversion du sens du courant génère sur l'ensemble de conversion un couple tendant à faire pivoter l'ensemble de conversion.

De préférence, les moyens de liaison autorisent une rotation de l'ensemble de conversion selon un axe de rotation perpendiculaire à la direction d'écoulement du fluide.

Dans certains modes de réalisation de l'invention, le défaut de symétrie est temporaire, c'est-à-dire que le défaut est provoqué par une inversion du sens du courant et disparait une fois que l'ensemble de conversion se trouve correctement orienté par rapport au courant.

Dans un premier mode de réalisation, l'élément de dissymétrie comprend un aileron mobile par rapport à l'ensemble de conversion, l'aileron étant apte à être actionné par le fluide.

L'aileron peut être monté rotatif par rapport à l'ensemble de conversion.

L'aileron peut être apte à s'orienter dans une première direction parallèle à la direction d'écoulement du fluide lorsque le fluide s'écoule dans un sens donné et à s'orienter avec un angle non-nul par rapport à la direction d'écoulement du fluide lors d'une inversion de sens d'écoulement du fluide.

L'aileron peut présenter une forme sensiblement incurvée par rapport au plan de symétrie de l'ensemble de conversion.

Dans un deuxième mode de réalisation, chaque module de conversion comprend une tuyère pour guider l'écoulement du fluide à travers l'hélice et l'élément de dissymétrie comprend des moyens pour modifier une section de passage du fluide dans une tuyère.

L'élément de dissymétrie peut comprendre un ou plusieurs volets mobiles montés à l'intérieur d'un canal d'écoulement du fluide de la tuyère.

Dans d'autres modes de réalisation de l'invention, le défaut de symétrie est permanent, c'est-à-dire que ce défaut est présent en permanence mais qu'il ne modifie que très peu le fonctionnement du système.

Dans un troisième mode de réalisation, l'élément de dissymétrie comprend un positionnement de l'axe de rotation dans une position décalée par rapport au plan de symétrie de l'ensemble de conversion.

Dans un quatrième mode de réalisation, le système comprend au moins deux modules de conversion, chaque module de conversion incluant une tuyère pour guider le fluide vers l'hélice, et dans lequel l'un des modules de conversion inclut une tuyère présentant une dimension sensiblement différente d'une dimension correspondante de la tuyère de l'autre module de conversion. Accumulateur

### PRESENTATION DES DESSINS

D'autres caractéristiques et avantages ressortiront encore de la description qui suit, laquelle est purement illustrative et non limitative te doit être lue en regard des figures annexées, parmi lesquelles :
- la figure 1 est une vue générale schématique d'un exemple de système de conversion destiné à être installé au fond de la mer,
- les figures 2A à 2C représentent de manière schématique un système de conversion conforme à un premier mode de réalisation de l'invention,
- la figure 2D représente de manière schématique une variante du système de conversion des figures 2A à 2C pour lequel le sens de retournement est piloté par un module de commande,
- les figures 3A à 3C représentent de manière schématique un système de conversion conforme à un deuxième mode de réalisation de l'invention,
- la figure 3D représente de manière schématique une variante du système de conversion des figures 3A à 3C pour lequel le sens de retournement est piloté par un module de commande,
- les figures 4A et 4B représentent de manière schématique un système de conversion conforme à un troisième mode de réalisation de l'invention,
- les figures 5A et 5B représentent de manière schématique un système de conversion conforme à un quatrième mode de réalisation de l'invention,
- les figures 6A à 6C représentent de manière schématique un système de conversion conforme à un cinquième mode de réalisation de l'invention.

### DESCRIPTION DETAILLEE DES MODES DE REALISATION

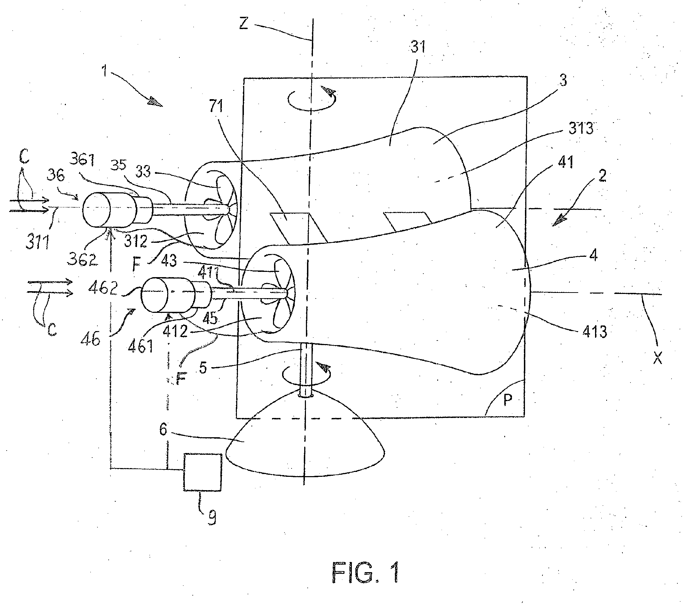

Sur la figure 1, le système de conversion 1 représenté comprend un ensemble de conversion 2 incluant deux modules de conversion 3 et 4 sensiblement identiques, un arbre rotatif 5 et un support fixe 6 destiné à être fixé au fond de la mer.

Les modules 3, 4 sont agencés de manière symétrique par rapport à un plan de symétrie vertical P.

Chaque module 3, 4 comprend une tuyère 31, 41 formant un canal longitudinal 32, 42 de guidage de l'eau de mer et une hélice 33, 43 agencée à l'intérieur du canal. Chaque tuyère 31, 41 présente une forme symétrique de révolution autour d'un axe longitudinal 311, 411. Chaque tuyère 31, 41 présente une entrée d'eau 312, 412 et une sortie d'eau 313, 413. L'eau en mouvement pénètre par l'entrée d'eau 312, 412, est guidée par le canal 32, 42 à travers l'hélice 33, 43 et sort par la sortie d'eau 313, 413. Chaque tuyère 31, 41 présente un profil adapté pour accélérer l'eau dans une zone du canal 32, 42 dans laquelle est positionnée l'hélice.

Chaque module 3, 4 comprend également un arbre de transmission 35, 45 relié à une extrémité à l'hélice 33, 43 correspondante et apte à être entraîné en rotation par celle-ci, un rotor 361, 461 comprenant au moins un aimant et relié à l'arbre de transmission à l'autre extrémité de celui-ci. Chaque module 3, 4 comprend encore un stator 362, 462 dans lequel le rotor 361, 461 est logé, au moins en partie. Le rotor 361, 461 et le stator 362, 462 forment un alternateur 36, 46 pouvant fonctionner en mode générateur ou moteur.

En mode générateur, les alternateurs 36, 46 permettent de transformer l'énergie mécanique de l'écoulement de l'eau de mer en énergie électrique via les hélices 33, 43. En mode moteur, les alternateurs 36, 46 permettent d'entraîner les hélices 33, 43 en rotation.

Dans une variante l'aimant peut être placé dans le stator 362, 462 au lieu du rotor 361, 461.

Les tuyères 31 et 41 sont montées solidaires l'une de l'autre grâce à des structures à poutres 71 et 72 reliant les tuyères l'une à l'autre.

L'ensemble de conversion 2 est monté rotatif par rapport au support fixe 6 par l'intermédiaire de l'arbre rotatif 5 qui supporte l'ensemble.

Plus précisément, l'ensemble de conversion 2 est monté rotatif autour d'un axe de rotation Z vertical, de sorte que les modules de conversion peuvent être orientés pour être alignés avec une direction X du courant C. Autrement dit, les axes longitudinaux 311, 411 des tuyères sont parallèles à la direction X du courant de manière à ce que l'ensemble de conversion 2 présente une efficacité maximale.

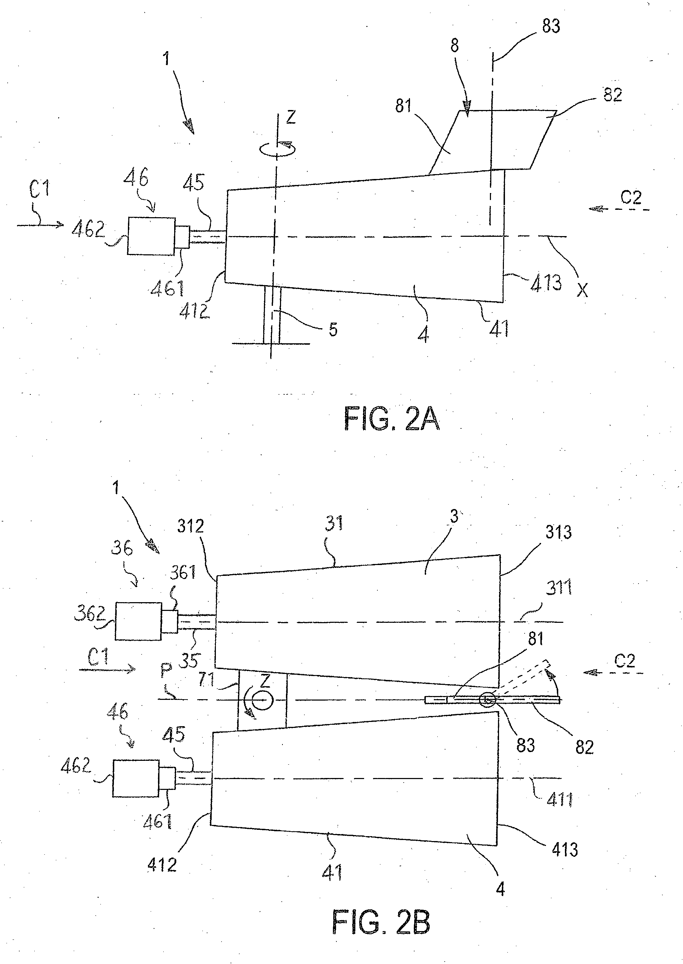

Les figures 2A à 2B représentent de manière schématique un système de conversion conforme à un premier mode de réalisation de l'invention.

Dans ce premier mode de réalisation, le système de conversion 1 comprend un aileron 8 de forme générale plane et s'étendant dans le plan de symétrie P de l'ensemble de conversion.

L'aileron 8 comprend une partie fixe 81 et une partie mobile 82 montée librement à rotation par rapport à la partie fixe 81, autour d'un axe de rotation 83 sensiblement vertical.

Grâce à la présence de l'aileron 8, l'ensemble de conversion 2 est apte à se retourner en cas d'inversion du sens du courant.

Dans le cas d'un courant provoqué par la marée, le courant d'eau de mer est orienté selon une direction X sensiblement constante. Cependant, l'intensité et le sens du courant d'eau de mer varie de manière cyclique.

Lorsque l'eau de mer est en mouvement dans un premier sens d'écoulement C1 (sens du flux), le système 1 s'oriente spontanément de manière à ce que les modules 3 et 4 se trouvent alignés avec la direction du courant. Plus précisément, le système 1 s'oriente de sorte que le plan P de symétrie se trouve parallèle à la direction X de l'écoulement. De plus, les modules 3 et 4 sont orientées de sorte que de l'eau pénètre par les entrées d'eau 312, 412, soit guidée par les canaux 32, 42 et sorte par les sorties 313, 413 de chacune des tuyères 31, 41. De cette façon, l'écoulement d'eau entraine en rotation les hélices 33, 43 agencées à l'intérieur des tuyères 31, 41.

Lors d'une inversion du courant, l'écoulement change de sens. L'eau de mer, en mouvement dans un deuxième sens C2 (sens du reflux), opposé au premier sens C1, agit sur l'aileron 8 et provoque la rotation de la partie mobile 82 de l'aileron par rapport à la partie fixe 81. Il en résulte que la partie mobile 82 de l'aileron forme un angle non nul avec le plan de symétrie P de l'ensemble de conversion (comme cela est représenté en traits pointillés sur la figure 2B).

Autrement dit, la rotation de la partie mobile 82 de l'aileron rompt la symétrie de l'ensemble de conversion par rapport au plan de symétrie P.

Le défaut de symétrie généré par l'aileron 8, sous l'action du courant C2, provoque une rotation de l'ensemble 2 autour de l'axe de rotation Z par rapport au support fixe 6.

L'ensemble 2 de conversion est soumis à un couple tendant à faire pivoter l'ensemble 2 de conversion autour de l'axe Z. L'ensemble 2 de conversion se retourne et s'oriente spontanément dans le sens de l'écoulement C2.

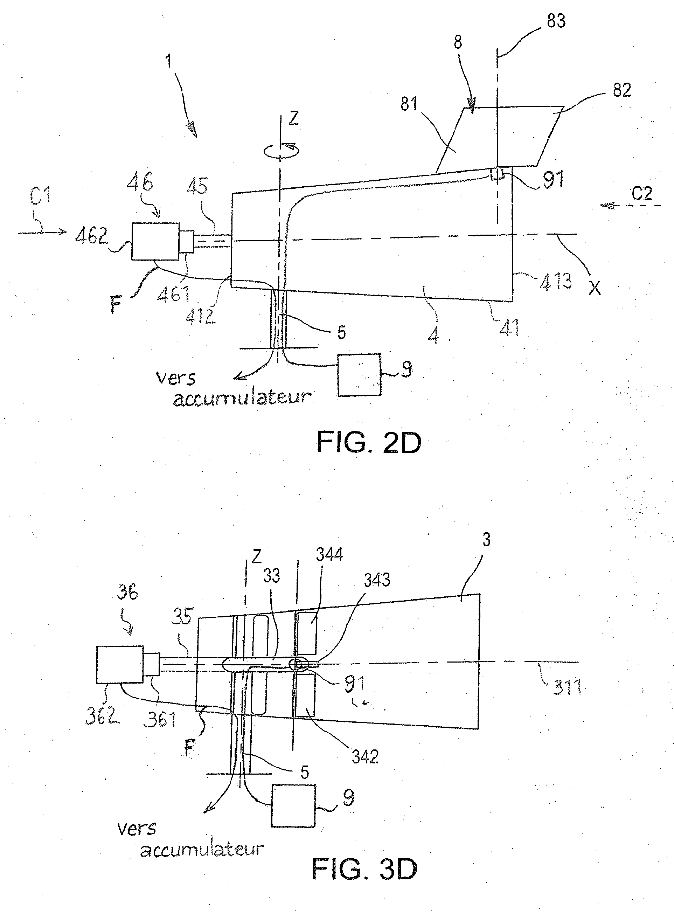

Quand des connexions électriques filaires F sont utilisées pour relier le stator 362, 462 à une source de courant électrique, par exemple un accumulateur, passant par l'arbre rotatif 5, la commande passive du retournement de l'ensemble 2 de conversion par la partie mobile 82 de l'aileron ne peut être utilisée sans risquer que les connexions électriques filaires F ne s'enroulent autour dé l'arbre rotatif 5 ou s'entortillent sur elles-mêmes et par conséquent s'abîment (voir figure 2D).

Dans un tel cas, un module de commande 9 comprenant un moteur 91 pilote activement le sens de retournement de l'ensemble 2 de conversion. Le module de commande 9 pilote via son moteur 91 la partie mobile 82 pour que celle-ci s'oriente dans un sens donné par rapport au plan de symétrie général du système de conversion 1.

Par exemple, si après l'inversion de l'écoulement de l'eau de mer le sens du courant est suivant une direction C1, la partie mobile 82 est pilotée pour se déplacer d'un angle +α supérieur à 0 et inférieur ou égale à 30°, respectivement d'un angle -α inférieur à 0 et supérieur ou égale à -30° ; et
ci-après l'inversion du courant marin le sens du courant est suivant une direction C2, la partie mobile 82 est pilotée pour se déplacer d'un angle -B inférieur à 0 et supérieur ou égale à -30°, respectivement d'un angle +ß supérieur à 0 et inférieur ou égale à 30 °.

Ainsi, l'ensemble 2 de conversion tourne une fois dans le sens horaire puis la fois suivante dans le sens antihoraire. Les connexions électriques filaires F ne risquent donc pas de s'enrouler autour de l'arbre de rotation 5 ou de s'entortiller et de s'abîmer.

Les valeurs absolues des angles α et ß peuvent être égales ou différentes.

Le pilotage de l'aileron mobile 82 est réalisé lorsque le courant marin est minimum, c'est-à-dire au moment de l'inversion de celui-ci entre une marée montante et une marée descendante. Il est avantageusement automatisé eu égard aux heures de changement de marée.

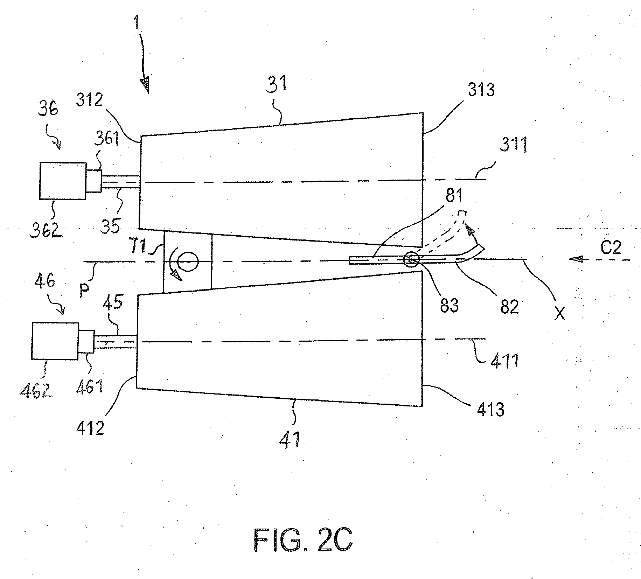

La figure 2C représente de manière schématique une variante du système des figures 2A et 2B, dans laquelle la partie mobile 82 présente une forme incurvée (et non pas plane comme dans le cas des figures 2A et 2B). La forme incurvée de la partie mobile 82 favorise la rotation de la partie mobile 82 lors de l'inversion du sens d'écoulement du courant.

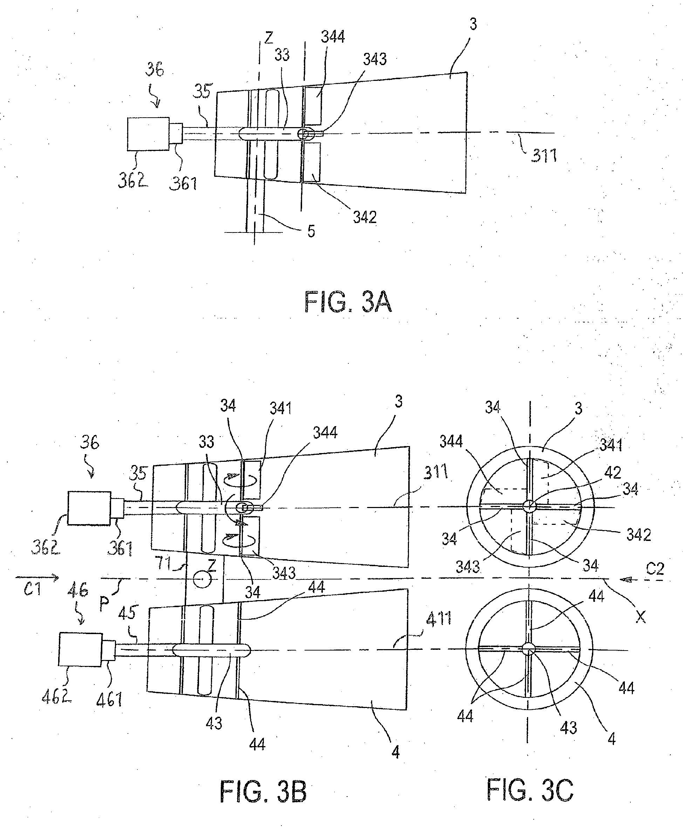

Les figures 3A à 3C représentent de manière schématique un système de conversion conforme à un deuxième mode de réalisation de l'invention.

Dans ce deuxième mode de réalisation, le module 3 comprend des volets mobiles 341 à 344 positionnés à l'intérieur de la tuyère. Ces volets mobiles 341 à 344 sont par exemple montés à rotation sur des barres de fixation 34 servant à fixer l'hélice à la tuyère. Ces barres de fixation 34 s'étendent dans des directions radiales par rapport à l'axe 311 de la tuyère 31. Chaque volet est monté rotatif par rapport à la barre de fixation à laquelle il est lié.

Lorsque l'eau de mer est en mouvement dans un premier sens d'écoulement C1 (sens du flux), le système 1 s'oriente spontanément de manière à ce que les modules 3 et 4 se trouvent alignés avec la direction du courant. Dans cette configuration, les volets 341 et 344 s'étendent parallèlement à la direction d'écoulement de l'eau de sorte qu'ils laissent l'eau s'écouler à travers la tuyère 3.

Lorsque le sens d'écoulement de l'eau s'inverse, l'eau de mer change de sens de mouvement. L'eau de mer, en mouvement dans un deuxième sens d'écoulement C2 (sens du reflux), opposé au premier sens C1, agit sur les volets 341 à 344 et provoque la rotation des volets par rapport aux barres de fixation 34. Dans cette configuration, les volets 341 à 344 font obstacle à l'écoulement de l'eau dans la tuyère 3.

La fermeture des volets 341 à 344 restreint la section de passage dans la tuyère 3 et rompt la symétrie de l'ensemble 2 de conversion par rapport au plan de symétrie P. L'eau s'écoule librement dans la tuyère 4 alors que l'écoulement est freiné dans la tuyère 3.

Le défaut de symétrie généré par les volets 341 à 344, sous l'action du courant C2 provoque une rotation de l'ensemble 2 autour de l'axe de rotation Z par rapport au support fixe 6.

L'ensemble 2 de conversion est soumis à un couple tendant à faire pivoter l'ensemble 2 de conversion autour de l'axe Z. L'ensemble 2 de conversion se retourne et s'oriente spontanément dans le sens de l'écoulement C2.

En variante de ce deuxième mode de réalisation, les volets mobiles 341 à 344 et 441 à 444 sont prévus dans les deux modules 3,4. La rupture de symétrie est pilotée par un module de commande 9 électrique comprenant un élément moteur 91, par exemple un vérin électrique ou un moteur électrique, qui agit sur ces volets mobiles 341 à 344 (voir figure 3D).

Par exemple, entre deux inversions du sens d'écoulement de l'eau de mer, le module de commande 9 électrique pilote les volets 341 à 344 et 441 à 444 pour que ceux-ci soient orientés parallèlement à la direction d'écoulement de l'eau de mer.

Quand l'écoulement de l'eau de mer change une première fois de sens, par exemple en passant du sens C1 au sens C2, le module de commande électrique pilote les volets 341 à 344 du module 3 pour que ceux-ci se ferment, c'est-à-dire qu'ils diminuent la section de la tuyère 31 à travers laquelle l'eau de mer peut s'écouler. L'ensemble 2 de conversion se retourne en tournant dans un premier sens autour de l'arbre de rotation 5, du fait de la dissymétrie occasionnée par la diminution de la section de la tuyère 31.

Une fois l'ensemble 2 de conversion orienté dans le sens d'écoulement de l'eau de mer C2, le module de commande 9 pilote les volets 341 à 344 du module 3 pour que ceux-ci s'ouvrent, c'est-à-dire qu'ils sont orientés parallèlement à la direction d'écoulement de l'eau de mer.

Quand l'écoulement de l'eau de mer change une deuxième fois de sens, par exemple en passant du sens C2 au sens C1, le module de commande 9 électrique pilote les volets 441 à 444 du module 4 pour que ceux-ci se ferment, c'est-à-dire qu'ils diminuent la section de la tuyère 41 à travers laquelle l'eau de mer peut s'écouler. L'ensemble 2 de conversion se retourne en tournant dans un deuxième sens opposé au premier sens autour de l'arbre de rotation 5, du fait de la dissymétrie occasionnée par la diminution de la section de la tuyère 41.

Une fois l'ensemble 2 de conversion orienté dans le sens d'écoulement de l'eau de mer C1, le module de commande 9 pilote les volets 441 à 444 du module 4 pour que ceux-ci s'ouvrent, c'est-à-dire qu'ils sont orientés parallèlement à la direction d'écoulement de l'eau de mer.

La fermeture des volets 341 à 344 ou 441 à 444 par le module de commande 9 est réalisée de préférence au moment de l'inversion de l'écoulement de l'eau de mer. Il est avantageusement automatisé eu égard aux heures de changement de marée.

Cette variante de réalisation est particulièrement avantageuse lorsque des connexions électriques filaires F sont utilisées afin que celles-ci ne s'enroulent pas autour de l'arbre de rotation 5 ou ne s'entortillent pas sur elles-mêmes.

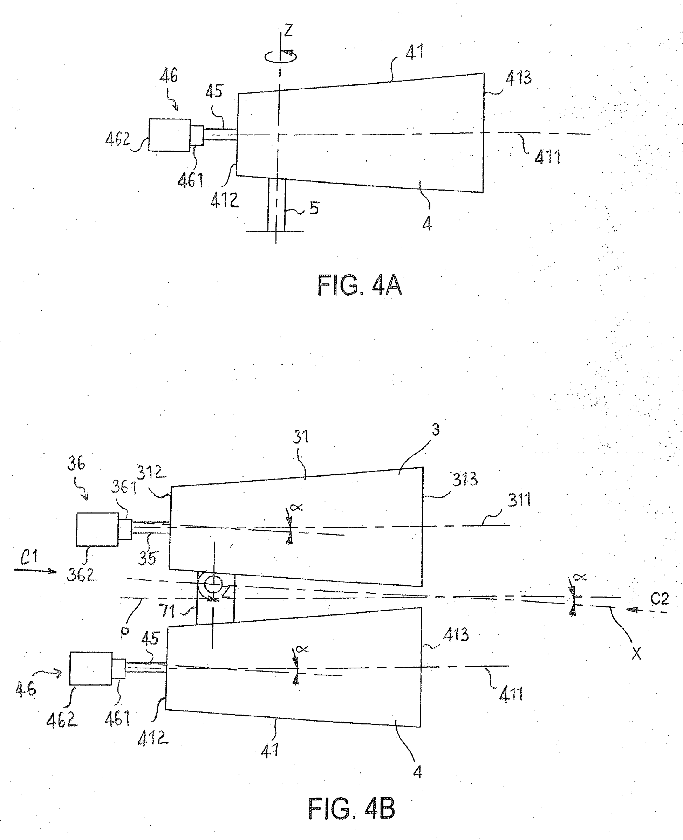

Les figures 4A et 4B représentent de manière schématique un système de conversion conforme à un troisième mode de réalisation de l'invention.

Dans ce troisième mode de réalisation, l'axe de rotation Z de l'ensemble de conversion 2 est légèrement décalé par rapport au plan de symétrie P de l'ensemble de conversion 2.

Du fait de ce décalage, l'ensemble 2 s'oriente naturellement de sorte que les axes longitudinaux 311, 411 des tuyères 31, 41 forment un angle α non nul avec la direction X du courant. L'axe de rotation Z est positionné par rapport à l'ensemble de conversion 2 de sorte que cet angle soit inférieur à 5 degrés lorsque l'ensemble de conversion 2 est soumis à l'action du courant.

Dans cette configuration, la direction du courant X n'est pas parfaitement parallèle au plan P de symétrie de l'ensemble de conversion. Autrement dit, le courant C1 (sens du flux) ne s'écoule pas de manière symétrique par rapport au plan P.

Lorsque le sens du courant s'inverse, l'eau de mer change de sens d'écoulement. L'eau de mer, qui s'écoule dans un deuxième sens C2 (sens du reflux), opposé au premier sens C1, agit sur les tuyères 31 et 41. Du fait du positionnement décalé de l'axe de rotation Z par rapport au plan de symétrie P, l'action du courant C2 génère sur l'ensemble 2 un couple non nul qui tend à faire pivoter l'ensemble 2 autour de l'axe de rotation Z.

L'ensemble 2 pivote autour de l'axe de rotation Z par rapport au support fixe 6 et s'oriente spontanément dans le sens de l'écoulement C2.

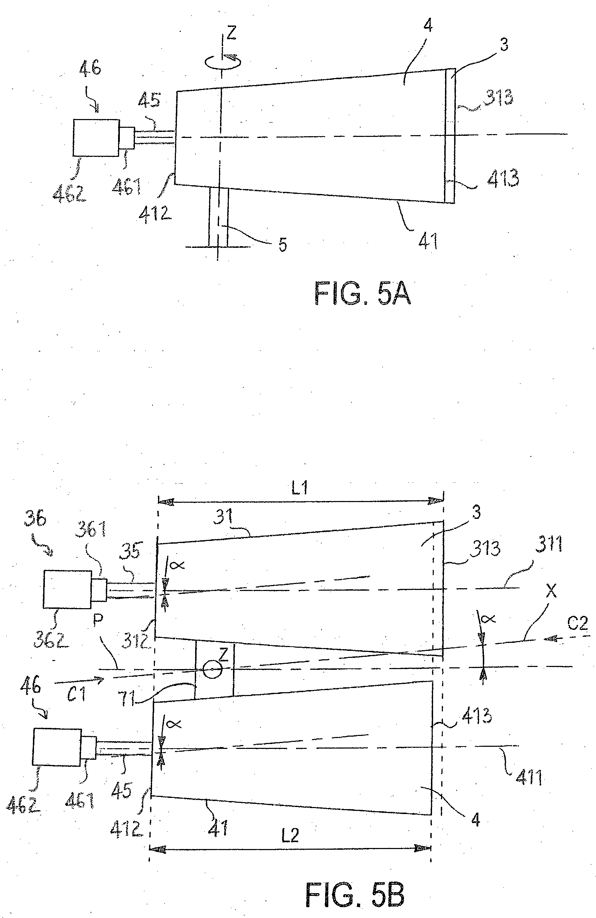

Les figures 5A et 5B représentent de manière schématique un système de conversion conforme à un quatrième mode de réalisation de l'invention.

Dans ce quatrième mode de réalisation, les tuyères 31 et 41 sont sensiblement identiques, excepté que la tuyère 31 présente une longueur L1 (dimension mesurée selon l'axe longitudinal 311) légèrement supérieure à la longueur L2 (dimension mesurée selon l'axe longitudinal 411) de la tuyère 41.

Du fait de cette différence de dimension, l'ensemble 2 s'oriente naturellement de sorte que les axes longitudinaux 311, 411 des tuyères 31, 41 forment un angle α non nul avec la direction X du courant. La différence de longueur L1 - L2 est telle cet angle est inférieur à 5 degrés.

Dans cette configuration, la direction du courant X n'est pas parfaitement parallèle au plan P de symétrie de l'ensemble de conversion. Autrement dit, le courant C1 (sens du flux) ne s'écoule pas de manière symétrique par rapport au plan P.

Lorsque le sens du courant s'inverse, l'eau de mer change de sens de mouvement. L'eau de mer, en mouvement dans un deuxième sens C2 (sens du reflux), opposé au premier sens C1, agit sur les tuyères 3 et 4. Du fait de la légère dissymétrie de l'ensemble 2 par rapport au plan de symétrie P, l'action du courant C2 génère sur l'ensemble 2 un couple non nul qui tend à faire pivoter l'ensemble 2 autour de l'axe de rotation Z.

L'ensemble 2 pivote autour de l'axe de rotation Z par rapport au support fixe 6 et s'oriente spontanément dans le sens de l'écoulement C2.

La rupture de symétrie au moment de l'inversion de l'écoulement de l'eau de mer peut également être pilotée activement dans le système de conversion symétrique par action sur l'ensemble 2 de conversion.

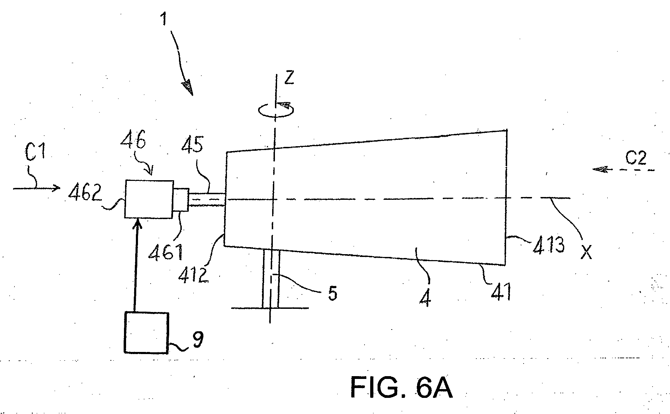

Les figures 6A à 6C présentent de manière schématique un système de conversion conforme à un cinquième mode de réalisation.

Dans ce cinquième mode de réalisation, la rupture de symétrie du système de conversion peut être occasionnée, par exemple, par la mise en rotation différentielle des hélices 33, 43 grâce à un module de commande 9 dédié, c'est-à-dire que le module de commande 9 impose une vitesse de rotation différente pour chacune des hélices, en accélérant, freinant ou arrêtant l'une des hélices 33, 43. L'accélération, le freinage ou l'arrêt de l'hélice 33, 43 est possible en utilisant l'alternateur 36, 46 auquel elle est relié mécaniquement en mode moteur.

Ce pilotage actif de la rupture de symétrie permet également de choisir le sens de rotation de l'ensemble 2 de conversion au moment de son retournement pour se positionner dans le sens d'écoulement de l'eau de mer. Ceci a pour avantage d'éviter un enroulement de connexions électriques filaires F autour de l'arbre rotatif 5 si celles-ci sont utilisées.

Ainsi, il est possible de piloter séquentiellement le sens de rotation de l'ensemble 2 de conversion dans un sens lors d'une première inversion de l'écoulement de l'eau de mer, puis dans l'autre sens lors d'une deuxième inversion de l'écoulement l'eau de mer succédant à la première inversion. Pour cela, le module de commande 9 accélère, freine ou arrête l'une des hélices 33, 43 juste au moment de la première inversion ou peu de temps avant, et accélère, freine ou arrête l'autre hélice 43, 33 juste au moment de la deuxième inversion ou peu de temps avant.

Le pilotage actif de la rupture de symétrie est alors réalisé lorsque le courant marin est minimum. Il est avantageusement automatisé eu égard aux heures de changement de marée.

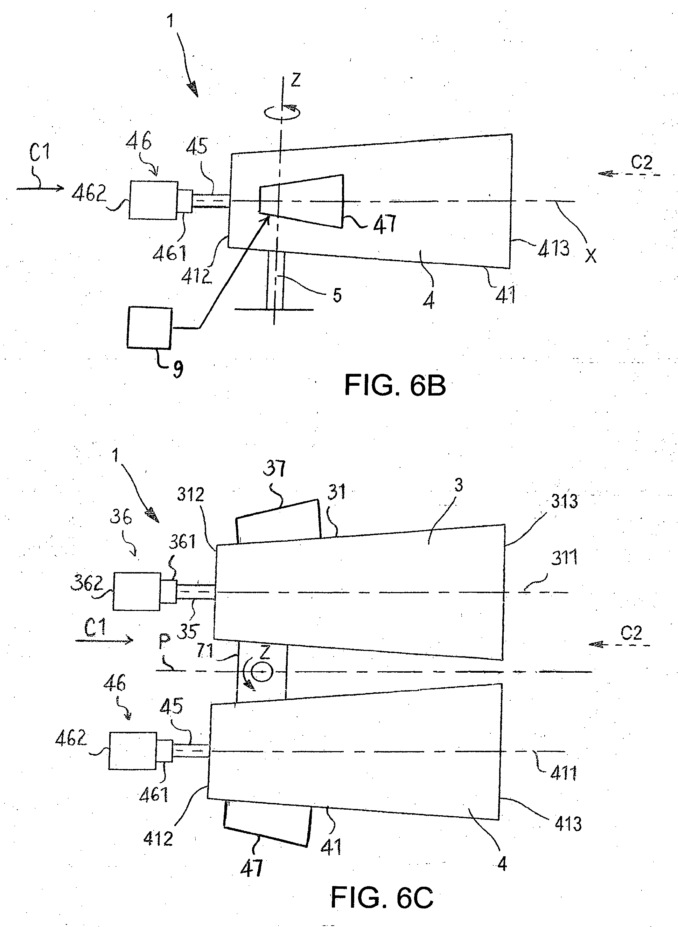

Une variante du pilotage actif est illustrée par les figures 6B et 6C. Dans cette variante, un propulseur 37, 47 est placé de part et d'autre du plan de symétrie P de l'ensemble 2 de conversion. Par exemple, les propulseurs 37, 47 peuvent être positionnés sur le bord ou l'axe des tuyères 31, 41 correspondantes. Les propulseurs 37, 47 peuvent être des moteurs immergés faisant tourner une hélice propulsive ou des propulseurs à jet de fluide. Le module de commande 9 permet de commander les propulseur 37, 47.

Ainsi, il est possible de piloter séquentiellement le sens de rotation de l'ensemble 2 de conversion dans un sens lors d'une première inversion de l'écoulement de l'eau de mer, puis dans l'autre sens lors d'une deuxième inversion de l'écoulement l'eau de mer succédant à la première inversion. Pour cela, le module de commande 9 actionne un des propulseurs 37, 47 juste au moment de la première inversion ou peu de temps avant, et l'autre des propulseurs 37, 47 juste au moment de la deuxième inversion ou peu de temps avant.

L'utilisation de tels propulseurs permet également de déconnecter la rotation de l'ensemble 2 de conversion du sens de l'écoulement de l'eau de mer ou de la présence-même de cet écoulement de l'eau de mer.

En outre, il est possible de désaxer l'ensemble 2 de conversion par rapport à la direction de l'écoulement de l'eau de mer. Malgré une perte en puissance, ce désaxage peut être avantageux, par exemple lors de marées trop fortes. Ainsi, il est possible de moduler la production d'énergie électrique.

Les différents éléments de dissymétrie décrit en relation avec les modes de réalisation des figures 2 à 5 peuvent être utilisés seuls ou en combinaison.

L'invention permet d'obtenir une orientation initiale correcte de l'ensemble de conversion 2 lors du montage du système. En effet, le montage est réalisé au cours d'une période dans laquelle l'intensité du courant est minimale, c'est-à-dire dans une période d'inversion du sens du courant de marée.

L'invention permet également d'obtenir une orientation correcte de l'ensemble au cours de son fonctionnement. En effet, l'orientation de l'ensemble 2 de conversion est inversée à chaque inversion du sens du courant de manière à obtenir une efficacité maximale de fonctionnement des modules de conversion.

## Revendications

1. Système (1) de conversion de l'énergie d'un fluide naturellement en mouvement selon une direction d'écoulement (X) sensiblement constante, comprenant :
- un ensemble (2) de conversion incluant un ou plusieurs module(s) (3, 4) de conversion, chaque module de conversion comprenant une hélice (33, 43) apte à être entrainée en rotation par le fluide, l'ensemble (2) de conversion présentant une forme générale symétrique par rapport à un plan (P) de symétrie,
- des moyens (5) de liaison de l'ensemble (2) de conversion avec un support fixe (6), les moyens (5) de liaison autorisant une rotation de l'ensemble (2) de conversion par rapport au support (6) autour d'un axe de rotation (Z) vertical,
- des moyens (8, 341-344) pour provoquer une rotation de l'ensemble (2) par rapport au support fixe (6) comprenant un élément de dissymétrie apte a créer un défaut de symétrie de l'ensemble de conversion par rapport au plan (P) de symétrie de l'ensemble (2) de conversion ;
**caractérisé en ce que** l'élément de dissymétrie est agencé sur l'ensemble (2) de conversion de manière à provoquer un retournement de l'ensemble (2) de conversion autour de l'axe de rotation (Z) vertical sous l'action d'une inversion de sens (C1, C2) d'écoulement du fluide.

2. Système selon la revendication qui précède, dans lequel l'élément de dissymétrie comprend un aileron (82) mobile par rapport à l'ensemble (2) de conversion, l'aileron (82) étant apte à être actionné par le fluide.

3. Système selon la revendication 2, dans lequel l'aileron (82) est monté rotatif par rapport à l'ensemble (2) de conversion.

4. Système selon la revendication 3, dans lequel l'aileron (82) est apte à s'orienter dans une première direction parallèle à la direction (X) d'écoulement du fluide lorsque le fluide s'écoule dans un sens donné et à s'orienter avec un angle non-nul par rapport à la direction (X) d'écoulement du fluide lors d'une inversion de sens d'écoulement du fluide.

5. Système selon l'une des revendications 2 à 4, dans lequel l'aileron (82) présente une forme sensiblement incurvée par rapport au plan (P) de symétrie de l'ensemble (2) de conversion.

6. Système selon l'une des revendications qui précèdent, dans lequel chaque module (3, 4) de conversion comprend une tuyère (31, 41) pour guider l'écoulement du fluide à travers l'hélice (33, 43) et l'élément de dissymétrie comprend des moyens (341-344) pour modifier une section de passage du fluide dans une tuyère (31).

7. Système selon la revendication 6, dans lequel l'élément de dissymétrie comprend un ou plusieurs volets mobiles (341-344) montés à l'intérieur d'un canal d'écoulement du fluide de la tuyère (31, 41).

8. Système selon l'une des revendications qui précèdent, dans lequel les moyens (5) de liaison autorisent une rotation de l'ensemble (2) de conversion selon un axe (Z) de rotation perpendiculaire à la direction (X) d'écoulement du fluide.

9. Système selon la revendication 8, dans lequel l'élément de dissymétrie comprend un positionnement de l'axe de rotation (Z) dans une position décalée par rapport au plan (P) de symétrie de l'ensemble (2) de conversion.

10. Système selon l'une des revendications qui précèdent, comprenant au moins deux modules (3, 4) de conversion, chaque module (3, 4) de conversion incluant une tuyère (31, 41) pour guider le fluide vers l'hélice (33, 43), et dans lequel l'un (3) des modules de conversion inclut une tuyère (31) présentant une dimension (L1) sensiblement différente d'une dimension (L2) correspondante de la tuyère (41) de l'autre module (4) de conversion.

## Patentansprüche

1. System (1) zur Umwandlung der Energie eines sich in einer etwa konstanten Fließrichtung (X) natürlich bewegenden Fluids, umfassend:
- eine Umwandlungseinheit (2), die ein oder mehrere Umwandlungsmodul(e) (3, 4) einschließt, wobei jedes Umwandlungsmodul ein Flügelrad (33, 43) umfasst, das imstande ist, von dem Fluid rotierend angetrieben zu sein, wobei die Umwandlungseinheit (2) eine in Bezug auf eine Symmetrieebene (P) allgemein symmetrische Form aufweist,
- Verbindungsmittel (5) der Umwandlungseinheit (2) mit einer festen Stütze (6), wobei die Verbindungsmittel (5) eine Rotation der Umwandlungseinheit (2) in Bezug zur Stütze (6) um eine vertikale Rotationsachse (Z) gestatten,
- Mittel (8, 341-344), um eine Rotation der Einheit (2) in Bezug zur festen Stütze (6) hervorzurufen, umfassend ein Asymmetrieelement, das imstande ist, eine Symmetrieabweichung der Umwandlungseinheit in Bezug zur Symmetrieebene (P) der Umwandlungseinheit (2) zu erzeugen;
**dadurch gekennzeichnet, dass** das Asymmetrieelement auf der Umwandlungseinheit (2) derart ausgebildet ist, dass unter Einwirkung einer Richtungsumkehr (C1, C2) der Fluidfließrichtung eine Wende der Umwandlungseinheit (2) um die vertikale Rotationsachse (Z) hervorgerufen wird.

2. System nach vorangehendem Anspruch, wobei das Asymmetrieelement einen in Bezug zur Umwandlungseinheit (2) beweglichen Flügel (82) umfasst, wobei der Flügel (82) imstande ist, von dem Fluid betätigt zu sein.

3. System nach Anspruch 2, wobei der Flügel (82) in Bezug zur Umwandlungseinheit (2) rotierend montiert ist.

4. System nach Anspruch 3, wobei der Flügel (82) imstande ist, sich in eine erste, zur Fließrichtung (X) des Fluids parallelen Richtung auszurichten, wenn das Fluid in eine bestimmte Richtung fließt, und sich bei einer Umkehr der Fließrichtung des Fluids mit einem Winkel von nicht Null in Bezug zur Fließrichtung (X) des Fluids auszurichten.

5. System nach einem der Ansprüche 2 bis 4, wobei der Flügel (82) eine in Bezug zur Symmetrieebene (P) der Umwandlungseinheit (2) etwa gekrümmte Form aufweist.

6. System nach einem der vorangehenden Ansprüche, wobei jedes Umwandlungsmodul (3, 4) eine Düse (31, 41) umfasst, um das Fließen des Fluids durch das Flügelrad (33, 43) zu lenken und das Asymmetrieelement Mittel (341-344) umfasst, um einen Durchgangsquerschnitt des Fluids in einer Düse (31) zu verändern.

7. System nach Anspruch 6, wobei das Asymmetrieelement eine oder mehrere bewegliche Klappen (341-344) umfasst, die im Innern eines Fließkanals des Fluids der Düse (31, 41) montiert sind.

8. System nach einem der vorangehenden Ansprüche, wobei die Verbindungsmittel (5) eine Rotation der Umwandlungseinheit (2) gemäß einer Rotationsachse (Z), die senkrecht zur Fließrichtung (X) des Fluids ist, gestatten.

9. System nach Anspruch 8, wobei das Asymmetrieelement eine Positionierung der Rotationsachse (Z) in einer Position umfasst, die in Bezug zur Symmetrieebene (P) der Umwandlungseinheit (2) versetzt ist.

10. System nach einem der vorangehenden Ansprüche, das mindestens zwei Umwandlungsmodule (3, 4) umfasst, wobei jedes Umwandlungsmodul (3, 4) eine Düse (31, 41) einschließt, um das Fluid zum Flügelrad (33, 43) zu lenken, und wobei eines (3) der Umwandlungsmodule eine Düse (31) einschließt, die eine Größe (L1) aufweist, die sich etwas von einer entsprechenden Größe (L2) der Düse (41) des anderen Umwandlungsmoduls (4) unterscheidet.

## Claims

1. A system (1) for converting energy from a fluid naturally in motion in a substantially constant flow direction (X) comprising:
- a conversion assembly (2) including one or more conversion module(s) (3, 4), each conversion module comprising a propeller (33, 43) capable of being driven in rotation by the fluid, the conversion assembly (2) having a generally symmetric shape with respect to a plane (P) of symmetry,
- means (5) for connecting the conversion assembly (2) to a fixed support (6), the connecting means (5) allowing rotation of the conversion assembly (2) with respect to the support (6) about a vertical axis (Z) of rotation,
- means (8, 341-344) for causing a rotation of the assembly (2) with respect to the fixed support (6) comprising a dissymmetry element capable of creating a lack of symmetry of the conversion assembly with respect to the plane (P) of symmetry of the conversion assembly (2);
**characterized in that** the dissymmetry element is positioned on the conversion assembly (2) so as to cause a reversal of the conversion assembly (2) about the vertical axis of rotation (Z) under the influence of a reversal of the flow direction (C1, C2) of the fluid.

2. The system according to the preceding claim, wherein the dissymmetry element comprises a fin (82) that is movable with respect to the conversion assembly (2), the fin (82) being capable of being actuated by the fluid.

3. The system according to claim 2, wherein the fin (82) is rotatably mounted with respect to the conversion assembly (2).

4. The system according to claim 3, wherein the fin (82) is capable of orienting itself in a first direction parallel to the fluid flow direction (X) when the fluid flows in a given direction and to orient itself with a non-zero angle with respect to the fluid flow direction (X) during a reversal of the flow direction of the fluid.

5. The system according to one of claims 2 to 4, wherein the fin (82) has a substantially curved shape with respect to the plane (P) of symmetry of the conversion assembly (2).

6. The system according to one of the preceding claims, wherein each conversion module (3, 4) comprises a nozzle (31, 41) for guiding the flow of the fluid through the propeller (33, 43) and the dissymmetry element comprises means (341-344) for modifying a flow cross-section of the fluid in a nozzle (31).

7. The system according to claim 6, wherein the dissymmetry element comprises one or more movable shutters (341-344) mounted inside a fluid flow channel of the nozzle (31, 41).

8. The system according to one of the preceding claims, wherein the connection means (5) allow rotation of the conversion assembly (2) about a rotation axis (Z) perpendicular to the fluid flow direction (X).

9. The system according to claim 8, wherein the dissymmetry element comprises a positioning of the axis of rotation (Z) in a position offset with respect to the plane (P) of symmetry of the conversion assembly (2).

10. The system according to one of the preceding claims, comprising at least two conversion modules (3, 4), each conversion module (3, 4) including a nozzle (31, 41) to guide the fluid toward the propeller (33, 43) and wherein one (3) of the conversion modules includes a nozzle (31) having a dimension (L1) substantially different from a corresponding dimension (L2) of the nozzle (41) of the other conversion module (4).
